(19) Europäisches Patentamt / European Patent Office / Office européen des brevets

(11) **EP 4 331 927 B1**

(12) **EUROPEAN PATENT SPECIFICATION**

(45) Date of publication and mention
of the grant of the patent:
**20.11.2024   Bulletin 2024/47**

(21) Application number: **22193702.2**

(22) Date of filing: **02.09.2022**

(51) International Patent Classification (IPC):
*B60T 8/17* [(2006.01)]     *B60T 8/172* [(2006.01)]
*B60T 17/22* [(2006.01)]     *B60T 8/18* [(2006.01)]
*B60T 8/32* [(2006.01)]

(52) Cooperative Patent Classification (CPC):
**B60T 8/1705; B60T 8/172; B60T 8/1893;**
**B60T 8/3235; B60T 17/228;** B60T 2240/06

(54) **CONTROLLER FOR ESTIMATING AXLE WEIGHTS OF A RAIL VEHICLE, COMPUTER-IMPLEMENTED METHOD THEREFOR, COMPUTER PROGRAM AND NON-VOLATILE DATA CARRIER**

STEUERGERÄT ZUM SCHÄTZEN DER ACHSGEWICHTE EINES SCHIENENFAHRZEUGS, COMPUTERIMPLEMENTIERTES VERFAHREN DAZU, COMPUTERPROGRAMM UND NICHTFLÜCHTIGER DATENTRÄGER

CONTRÔLEUR POUR ESTIMER LES POIDS DES ESSIEUX D'UN VÉHICULE FERROVIAIRE, PROCÉDÉ MIS EN ŒUVRE PAR ORDINATEUR CORRESPONDANT, PROGRAMME INFORMATIQUE ET SUPPORT DE DONNÉES NON VOLATILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.03.2024   Bulletin 2024/10**

(73) Proprietor: **Dellner Bubenzer AB**
**781 70 Borlänge (SE)**

(72) Inventors:
• **PRIM, Viktor**
**811 61 SANDVIKEN (SE)**

• **LENNARTSSON, Svante**
**791 46 FALUN (SE)**

(74) Representative: **Brann AB**
**P.O. Box 3690**
**Sveavägen 63**
**103 59 Stockholm (SE)**

(56) References cited:
**EP-A1- 3 483 029        US-A1- 2009 095 195**
**US-A1- 2018 201 157**

**Description**

TECHNICAL FIELD

The present invention relates generally to rail vehicle traction systems. Especially, the invention relates to a controller according to the preamble of claim 1 for estimating the axle weights of a rail vehicle to enable enhanced traction control in operation of the rail vehicle. The invention also relates to a corresponding computer-implemented method, a computer program and a non-volatile data carrier storing such a computer program.

BACKGROUND

When operating a rail vehicle, it is important to have accurate knowledge about the current adhesion conditions at the wheel-rail interface, i.e. the applicable kinetic friction coefficient. Namely, this is key for speed control in terms of retardation as well as acceleration. To improve the overall throughput and enhance the flexibility of railway traffic, it is envisaged that control systems will be implemented that employ so-called dynamic moving blocks to operate the rail vehicles in a railway network. In simplified terms, this means that the free distances between different rail vehicles are reduced substantially and set dynamically depending various parameters, such as the speeds and overall weights of the respective rail vehicles. Of course, the kinetic friction coefficient on each rail segment is also an important parameter in this context. Provided that one has access to reliable values of the kinetic friction coefficient, the rail vehicles may be controlled to accelerate and decelerate in a highly efficient manner.

For even better speed control, it is also necessary to know exactly how the rail vehicle's weight is distributed over its wheel axles.

Namely, only a comparatively low traction/brake force can be applied to a relatively lightly loaded axle without risking that its wheels experience slippage against the rails, whereas a relatively heavily loaded axle may be subjected to a comparatively high traction/brake force before its wheels experience slippage against the rails. Both for efficiency reasons and to avoid material damage, wheel sliding shall be avoided whenever possible. Therefore, to be on the safe side, an estimated lowest axle weight typically determines the maximum allowed traction/brake force for a the rail vehicle. Of course, this results in an overall suboptimal ace-leration/braking performance.

Various attempts have been made to determine the total weight of a vehicle. For example, US 9,358,846 describes a load estimation system and method for estimating vehicle load. The system includes a tire rotation counter for generating a rotation count from rotation of a tire; apparatus for measuring distance travelled by the vehicle; an effective radius calculator for calculating effective radius of the tire from the distance travelled and the rotation count; and a load estimation calculator for calculating the load carried by the vehicle tire from the effective radius of the tire. A center of gravity height estimation may be made from an estimated total load carried by the tires supporting the vehicle pursuant to an estimation of effective radius for each tire and a calculated load carried by each tire from respective effective radii.

US 9,500,514 shows a method and a system for estimating a weight for a vehicle on the basis of at least two forces which act upon the vehicle. The forces are a motive force and at least one further force, and topographical information for a relevant section of road. The estimation is performed when the at least two forces are dominated by the motive force.

US 9,211,879 discloses devices and methods, which relate to the arrangement of a sensor on the shaft of a rail vehicle to determine its mass. For example, an output signal of an acceleration sensor is evaluated, which is disposed on a shaft of the rail vehicle. The mass of a freight wagon can be determined in that it vibrates in a manner typical to the mass (frequency, amplitude) after impact (switching impact, running over a switch). The impact can be determined in direction and intensity by the acceleration sensor on the shaft (axle), the vibration can be determined by the same acceleration sensor or by a further sensor on the chassis. From this measurement data, the mass of the wagon and the mass of the load with known empty weight and thereby the loading state can be determined.

The above documents describe different strategies for determining the weight as well as other characteristic properties of vehicles. However, there is yet no satisfying solution for establishing how a vehicle's total weight is distributed over its axles, such that for example the acceleration of the vehicle may be improved.

SUMMARY

The object of the present invention is to solve the above problems and offer a solution that enables determining the specific axle weights of a rail vehicle in an accurate and reliable manner.

According to one aspect of the invention, the object is achieved by a controller for estimating axle weights of a rail vehicle, which, in turn, contains a number of wheel axles and a set of drive units. Each drive unit is configured to apply a respective traction force to each wheel axle in a driving subset of the wheel axles so as to cause acceleration of the rail vehicle. The controller is configured to obtain a power signal and a speed signal. The power signal indicates an amount of power produced by the set of drive units to accelerate the rail vehicle from a first speed to a second speed, for example from zero to 5 km/h. The speed signal indicates respective values of the first and second speeds. Based on the power and speed signals, the controller is configured to estimate an overall weight of the rail vehicle, and by executing the following steps, the controller is further configured to estimate how the overall weight is distributed over the vehicle's wheel axles: (a) obtaining wheel speed signals indicating respective rotational speeds of the wheel axles in the driving subset of the wheel axles; (b) producing an acceleration control signal to a specific drive unit in the set of drive units such that this drive unit applies a gradually increasing traction force to a specific wheel axle of the wheel axles in the driving subset of the wheel axles; (c) determining, repeatedly during production of the acceleration control signal, an absolute difference between the rotational speed of the specific wheel axle and an average rotational speed of the wheel axles In the driving subset of the wheel axles except the specific wheel axle; and in response to the absolute difference exceeding a threshold value (d) determining a parameter that reflects a friction coefficient between a pair of wheels on the specific wheel axle and a pair of rails upon which the rail vehicle travels; repeating steps (a) to (c) for each of the wheel axles in the driving subset of the wheel axles, and based thereon estimate a respective fraction of the overall weight carried by each of wheel axles in the driving subset of the wheel axles.

The above controller is advantageous because it provides accurate values of the overall weight of the rail vehicle as well as its axle weights. As a bonus effect, this also enables the rail vehicle to brake without risking slippage.

Furthermore, the proposed controller is beneficial, since it allows for dynamic adaptation of the acceleration and braking functionality during travel in response to any redistribution of the load, e.g. due to passengers moving around in a train. More important, it is possible to apply dynamic moving block control of a rail vehicle, wherein the control is appropriately adjusted in response to cargo being loaded/unloaded and/or passengers embarking/disembarking.

According to one embodiment of this aspect of the invention, for any non-driven wheel axle, the controller is further configured to: (e) obtain wheel speed signals indicating respective rotational speeds of each wheel axle of the rail vehicle, (f) produce a brake control signal to a brake unit configured to apply a brake force to the non-driven wheel axle such that this brake unit applies a gradually increasing brake force to the non-driven wheel axle, (g) determine, repeatedly during production of the brake control signal, an absolute difference between the rotational speed of the non-driven wheel axle and an average rotational speed of the wheel axles except the non-driven wheel axle; and in response to the absolute difference exceeding a threshold value (h) determine a parameter reflecting a friction coefficient between a pair of wheels on the specific wheel axle and the pair of rails upon which the rail vehicle travels. The controller is configured to repeat steps (e) to (g) for each of the non-driven wheel axles, and based thereon estimate a respective fraction of the overall weight carried by each of the non-driven wheel axles. Thereby, individual axle weights can be determined for the entire set of wheel axles of a rail vehicle.

According to another embodiment of this aspect of the invention, the controller contains a first interface configured to receive a first vector signal expressing an inclination angle of the rail vehicle relative to a horizontal plane. The controller is configured to adjust the power signal indicating the amount of power produced by the onboard motor and/or the speed signal indicating the second speed based on the inclination angle when estimating the overall weight of the rail vehicle. Such adjustment is necessary if the overall weight of the rail vehicle is estimated when the rail vehicle travels on non-horizontal ground because in an uphill slope a part of the motor power is converted into potential energy, and conversely, in a downhill slope a part of the kinetic energy originates from potential energy.

According to yet another embodiment of this aspect of the invention, the controller also has a second interface configured to receive a second vector signal expressing a respective rotational movement of the wheels on each wheel axle in the driving subset of the wheel axles, which rotational movement is performed in a plane orthogonal to a respective rotation axis of the wheel axle.

Here, the controller is further configured to obtain the wheel speed signals indicating the respective rotational speeds based on the first and second vector signals. Thereby, accurate values of the wheel speed can be derived without any tachometer. This, in turn, vouches for robust and reliable measurements.

According to another embodiment of this aspect of the invention, the controller is configured to provide the respective fractions of the overall weight to a traction controller to enable the traction controller to produce a respective acceleration control signal to each drive unit in the set of drive units. Hence, respective acceleration control signals may be based on the respective fractions of the overall weight, and the rail vehicle can be accelerated in an optimized manner, for example enabling efficient control of the rail vehicle according to the dynamic moving blocks principle.

Preferably, in the light of the above, the controller is co-located with the traction controller. For example the controller may be integrated into the traction controller, or vice versa.

According to yet another embodiment of this aspect of the invention, the controller is configured to transmit the acceleration control signal via a data bus in the rail vehicle. This renders the implementation cost-efficient and flexible.

According to another aspect of the invention, the object is achieved by a computer-implemented method for estimating specific axle weights of a rail vehicle that contains a number of wheel axles and a set of drive units. Each drive unit is configured to apply a respective traction force to each wheel axle in a driving subset of the wheel axles so as to cause acceleration of the rail vehicle. The method involves: obtaining a power signal indicating an amount of power produced by the set of drive units to accelerate the rail vehicle between first and second speeds; obtaining a speed signal indicating respective values of the first and second speeds, and based thereon estimating an overall weight of the rail vehicle. To estimate how the overall weight is distributed over the number of wheel axles, the method further involves: (a) obtaining wheel speed signals indicating respective rotational speeds of the wheel axles in the driving subset of the wheel axles; (b) producing an acceleration control signal to a specific drive unit in the set of drive units such that this drive unit applies a gradually increasing traction force to a specific wheel axle of the wheel axles in the driving subset of the wheel axles; (c) determining, repeatedly during production of the acceleration control signal, an absolute difference between the rotational speed of the specific wheel axle and an average rotational speed of the wheel axles in the driving subset of the wheel axles except the specific wheel axle; and in response to the absolute difference exceeding a threshold value (d) determining a parameter reflecting a friction coefficient between a pair of wheels on the specific wheel axle and a pair of rails upon which the rail vehicle travels. Steps (a) to (c) are repeated for each of the wheel axles in the driving subset of the wheel axles, and based thereon a respective fraction of the overall weight carried by each of wheel axles in the driving subset of the wheel axles is estimated. The advantages of this method, as well as the preferred embodiments thereof are apparent from the discussion above with reference to the proposed controller.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

BRIEF DESCRIPTION OF THE DRAWINGS

The invention is now to be explained more closely by means of preferred embodiments, which are disclosed as examples, and with reference to the attached drawings.

Figure 1     schematically illustrates a rail vehicle equipped with a controller according to one embodiment of the invention;
Figure 2     shows a drive unit according to one embodiment of the invention;
Figure 3     shows a graph illustrating an example of the friction coefficient as a function of wheel slippage;
Figure 4     schematically illustrates an accelerometer according to one embodiment of the invention;
Figure 5     shows a block diagram of a controller according to one embodiment of the invention;
Figure 6     illustrates, by means of a flow diagram, the general method according to the invention; and
Figure 7     illustrates, by means of a flow diagram, one embodiment of the method according to the invention

DETAILED DESCRIPTION

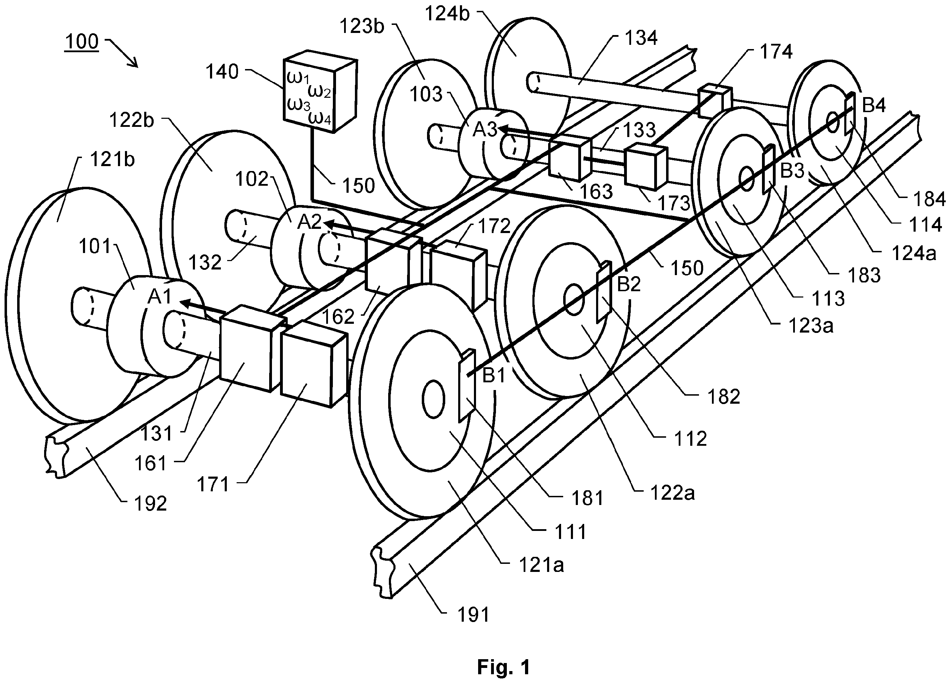

In Figure 1, we see a schematic illustration of a rail vehicle 100 equipped with a controller 140 according to one embodiment of the invention.

The controller 140 is arranged to estimate the different axle weights of the rail vehicle 100, which has a number of wheel axles. Figure 1 exemplifies four such wheel axles in the form of 131, 132, 133 and 134 respectively. In response to acceleration control signals A1, A3 and A3 from acceleration controllers 161, 162 and 163, a set of drive units 101, 102 and 103 is configured to apply a respective traction force to each wheel axle in a driving subset of the wheel axles 131, 132 and 133, such that the rail vehicle 100 accelerates. Analogously, in response to brake control signals B1, B2, B3 and B4 from brake controllers 171, 172, 173 and 174, a set of brake units 181, 182, 183 and 184 is configured to apply a respective brake force to each of the wheel axles 131, 132, 133 and 134 respectively, such that the rail vehicle 100 decelerates.

Each of the brake units 181, 182, 183 and 184 is associated with a respective rotatable member 111, 112, 113 and 114, such as a brake disc or a brake drum being mechanically linked to the respective wheel axle 131, 132, 133 and 134. At least one respective pressing member of each brake unit is configured to apply a brake force to the rotatable member so as to cause retardation of the wheel axle and the wheels thereon.

In practice, a typical rail vehicle contains a substantially larger number of wheel axles than what is shown in Figure 1. Traditionally, each bogie has two wheel axles carrying altogether four wheels, and each car body of the rail vehicle 100 includes a respective bogie in the front and rear ends.

The rail vehicle 100 contains a set of drive units 101, 102 and 103 respectively configured to apply a respective traction force to each of the wheel axles 131, 132 and 133 in the driving subset of the wheel axles. The rail vehicle 100 also contains a set of brake units 181, 182, 183 and 184 respectively configured to apply a respective brake force to each of the wheel axles 131, 132, 133 and 134. Consequently, by operating the brake units 181, 182, 183 and 184, the rail vehicle 100 may be caused to retard/decelerate.

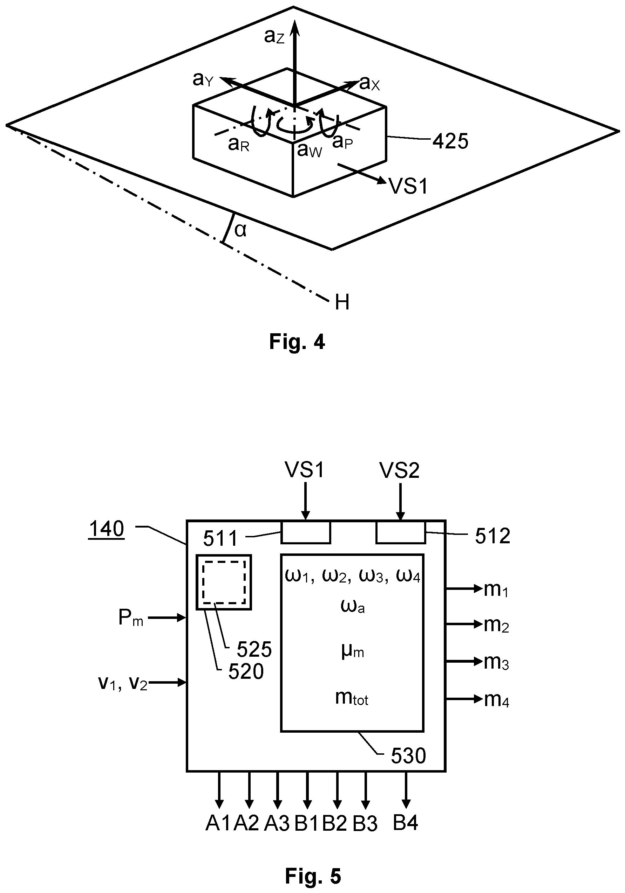

Referring now to Figure 5, the controller 140 is configured to obtain a power signal $P_m$ indicating an amount of power being produced by the set of drive units 101, 102 and 103 when accelerating the rail vehicle 100 from a first speed $v_1$ to a second speed $v_2$, for example from a standstill to 10 km/h. Of course, however, according to the invention, the power signal $P_m$ may equally well be received during acceleration of the rail vehicle 100 between any other two speed levels. In any case, the controller 140 is configured to obtain a speed signal indicating respective values of the first and second speeds $v_1$ and $v_2$.

Based on the power signal $P_m$ and the values of the first and second speeds $v_1$ and $v_2$, the controller 140 is configured to estimate an overall weight $m_{tot}$ of the rail vehicle 100.

This may be done under the assumption that any losses in the motor and losses due to wind and rolling resistance are negligible, which is basically true for low speeds. Namely, under this assumption, all the supplied power is converted into kinetic energy of the rail vehicle, i.e. $P \cdot t = W_k$, where P is the supplied power, t is the time during which the power has been supplied and $W_k$ is the resulting kinetic energy.

The resulting kinetic energy $W_k$, in turn, may be expressed as:

$$W_k = m_{tot} \cdot v^2/2, \text{ where } v = v_2 - v_1.$$

In other words, the controller 140 may calculate the overall weight $m_{tot}$ of the rail vehicle 100 as:

$$m_{tot} = \frac{(v_2-v_1)^2}{2Pt}$$

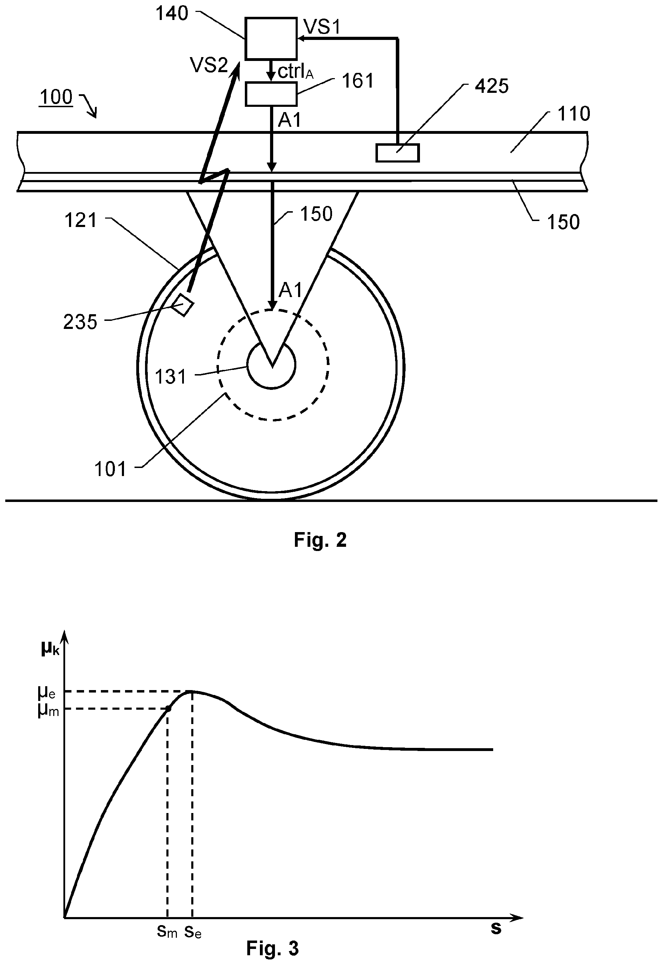

Referring now also to Figure 2, the controller 140 is further configured to:

(a) obtain wheel speed signals indicating respective rotational speeds $\omega_1$, $\omega_2$ and $\omega_3$ of the wheel axles 131, 132 and 133 respectively in the driving subset of wheel axles,

(b) produce an acceleration control signal A1 to a specific drive unit 101 in the set of drive units such that this drive unit 101 applies a gradually increasing traction force to a specific wheel axle in the set of driving wheel axles, here exemplified by 131,

(c) determine, repeatedly during production of the acceleration control signal A1, an absolute difference $| \omega_1 - \omega_a |$ between the rotational speed $\omega_1$ of the specific wheel axle 131 and an average rotational speed $\omega_a$ of all the wheel axles in the driving subset of the wheel axles except the specific wheel axle, i.e. here 132 and 133, and in response to the absolute difference $| \omega_1 - \omega_a |$ exceeding a threshold value

(d) determine a parameter $\mu_m$ reflecting a friction coefficient $\mu_e$ between a pair of wheels 121a and 121b respectively on the specific wheel axle 131 and a pair of rails 191 and 192 upon which the rail vehicle 100 travels.

Figure 3 shows a graph illustrating an example of how the kinetic friction coefficient $\mu_k$ may be expressed as a function of the wheel slippage s, which here is understood to designate a spinning motion of the wheel relative to the rail. However, technically, the wheel slippage s may equally well express a sliding motion of the wheel relative to the rail. In other words, the wheel slippage s is applicable to an acceleration scenario as well as a retardation ditto.

Characteristically, for lower values, the kinetic friction coefficient $\mu_k$ increases relatively proportionally with increasing wheel slippage s. When approaching a peak value $\mu_e$, however, the kinetic friction coefficient $\mu_k$ levels out somewhat. After having passed the peak value, the kinetic friction coefficient $\mu_k$ is essentially constant for all values of the wheel slippage s. Thus, the friction coefficient peak value $\mu_e$ is associated with an optimal wheel slippage $s_e$ after which a further increase of wheel slippage s results in a gradually reduced, and then almost constant kinetic friction coefficient $\mu_k$.

According to the invention, a parameter $\mu_m$ is determined that reflects the friction coefficient between the rail vehicle's 100 wheels and the rails 191 and 192 upon which the rail vehicle 100 travels. Ideally, the peak value $\mu_e$ should be derived. For example, the peak value $\mu_e$ may be derived as follows. When the absolute difference $| \omega_1 - \omega_a |$ between the rotational speed of the specific wheel axle 131 and an average rotational speed $\omega_a$ of all the rail vehicle's 100 wheel axles in the driving subset except the specific wheel axle 131 exceeds the threshold value, this corresponds to a situation where the wheels 121a and 121b on the specific wheel axle 131 experiences a wheel slippage $s_m$ near the optimal wheel slippage $s_e$. The kinetic friction coefficient $\mu_k$ is given by the expression:

$$\mu_k = \frac{F}{m_{tot} \cdot g}$$

where F is the drive force applied by the drive unit,
$m_{tot}$ is the overall weight of the rail vehicle 100, and
g is the standard acceleration due to gravity.

Under the assumption that the wheel slippage $s_m$ is near the optimal wheel slippage $s_e$, the peak value $\mu_e$ of the kinetic friction coefficient $\mu_k$ may be estimated relatively accurately; and the proximity of wheel slippage $s_m$ to the optimal wheel slippage $s_e$ is ensured by said threshold value for the absolute difference $|\omega_1 - \omega_a|$ between the rotational speed of the specific wheel axle 131 and the average rotational speed $\omega_a$ of all the rail vehicle's 100 wheel axles except the specific wheel axle 131.

Finally, the controller 140 is configured to repeat the above steps (a) to (c) for each wheel axle 131, 132 and 133 in the driving subset, and based thereon estimate a respective fraction $m_1$, $m_2$ and $m_3$ of the overall weight $m_{tot}$ carried by each of these wheel axles.

It is worth mentioning that the above-mentioned specific wheel axle 131 does not need to be any particular wheel axle, e.g. a frontmost or a rearmost wheel axle of the rail vehicle 100. On the contrary, the above procedure may start with an arbitrary selected wheel axle in the driving subset.

Moreover, it is generally advantageous to execute the above procedure in line with a schedule, fixed or dynamic, wherein each wheel axle in the driving subset alternately either represents the specific wheel axle or is included in the complement set, i.e. all the wheel axles except the specific wheel axle. Repeated execution of procedure is nevertheless beneficial to enable adjustment of the braking functionality in response to any changes in the overall weight $m_{tot}$ and/or a redistribution of the overall weight $m_{tot}$ over the wheel axles.

As exemplified by the wheel axle 134 in Figure 1, one or more of the rail vehicle's 100 wheel axles may be non-driven, i.e. not be comprised in the driving subset of the wheel axles 131, 132 and 133. To handle this case and thus enable estimation of the axle weights of the non-driven axles, according to one embodiment of the invention, the controller 140 is further configured execute the below procedure.

(e) Obtain wheel speed signals indicating respective rotational speeds $\omega_1$, $\omega_2$, $\omega_3$ and $\omega_4$ of each rail vehicle's 100 wheel axles 131, 132, 133 and 134 respectively;

(f) produce a brake control signal B4 to a brake unit 184 configured to apply a brake force to the non-driven wheel axle 134 such that this brake unit applies a gradually increasing brake force to the non-driven wheel axle 134;

(g) determine, repeatedly during production of the brake control signal B4, an absolute difference $|\omega_4 - \omega_a|$ between the rotational speed $\omega_4$ of the non-driven wheel axle 134 and an average rotational speed $\omega_a$ of all the wheel axles 131, 132 and 133 except the non-driven wheel axle 134; and in response to the absolute difference exceeding a threshold value, preferably however not necessarily the same threshold value as referred to above in relation to Figure 3

(h) determine a parameter $\mu_m$ reflecting a friction coefficient $\mu_e$ between a pair of wheels 124a and 124b on the specific wheel axle 134 and a pair of rails 191 and 192 upon which the rail vehicle 100 travels,

In the general case where the rail vehicle has more than one non-driven axle, the controller 140 is further configured to repeat steps (e) to (g) for each of the non-driven wheel axles, and based thereon estimate a respective fraction $m_4$ of the overall weight $m_{tot}$ carried by each of the non-driven wheel axles.

The controller 140 may be configured to generate a control message $ctrl_A$ to make the acceleration controllers 161, 162 and 162 produce acceleration control signals A1, A2 and A3 to the drive units 101, 102 and 103 respectively, such that an average drive force applied to the wheel axles 132, and 133 except the specific wheel axles 131 is gradually decreased when the drive force applied to the specific wheel axle 131 is gradually *increased*. In other words, the driving on the other wheel axles 132 and 133 compensate for the somewhat excessive drive force applied to the specific wheel axle 131.

Preferably, this compensation is temporally matched. This means that the controller 140 is configured to generate the control message $ctrl_A$ to cause the acceleration controllers 161, 162 and 162 to produce acceleration control signals A1, A2 and A3 to the drive units 101, 102 and 103 such that, at each point in time, the gradual decrease of the average drive force applied to the wheel axles 132 and 133 except the specific wheel axles 131 corresponds to the gradual increase of the drive force applied to the specific wheel axle 131. Namely, thereby the deviating drive force applied to specific wheel axle 131 is masked by the opposite deviation represented by the drive force applied to the wheel axles 132 and 133 in the driving subset.

Referring again to Figure 2, we see a drive unit 101 according to one embodiment of the invention. The drive unit 101 is configured to receive the acceleration control signal A1 from the acceleration controller 161, which, in turn, operates in response to the control message $ctrl_A$ from the controller 140. The acceleration control signal A1 may for example be transmitted via a data bus 150. In response to the acceleration control signal A1, the drive unit 101 is configured to drive the wheel axle 131. The drive unit 101 may contain at least one electric motor whose generated traction force depends on a magnitude of an electric current fed to it.

Further, for the overall efficiency, the data bus 150 may, of course, be configured to transmit the all the acceleration and brake control signals A1, A2 and A3 and B1, B2, B3 and B4 respectively to each of the drive units 101, 102 and 103 and each of the brake units 181, 182, 183 and 184.

Referring now to Figures 4 and 5, according to one embodiment of the invention, the controller 140 contains at least one interface 511 and 512 configured to receive first and second vector signals VS1 and VS2 respectively. The first vector signal VS1 expresses an acceleration $a_X$, $a_Y$, $a_Z$, $a_R$, $a_P$, and/or aw of the rail vehicle 100 in at least one dimension, for instance linearly in one or more spatial directions and/or rotations around one or more of these directions. The second vector signal VS2 expresses a respective rotational movement of the wheels 121a, 121b; 122a, 122b; 123a, 123b and 124a, 124b on each of the wheel axles. Consequently, since each wheel is configured to rotate around a respective one of the wheel axles, the rotational movement is performed in a plane being orthogonal to a respective rotation axis of the wheel axle.

The controller 140 is configured to obtain the wheel speed signals indicating the respective rotational speeds $\omega_1$, $\omega_2$, $\omega_3$ and $\omega_4$ based on the first and second vector signals VS1 and VS2 by applying physical mechanics algorithms known in the art. Of course, determining the average rotational speed $\omega_a$ is trivial once each of the individual rotational speeds $\omega_1$, $\omega_2$, $\omega_3$ and $\omega_4$ is known.

Figure 4 schematically illustrates a first accelerometer 425 according to one embodiment of the invention. The first accelerometer 425 is arranged in a frame element 110 of the rail vehicle 100. The first accelerometer 425 is configured to produce the first vector signal VS1 representing an acceleration of the a rail vehicle 100 in at least one dimension, typically in each of the three spatial directions $a_X$, $a_Y$ and $a_Z$ and respective rotations $a_R$, $a_P$ and $a_W$ around axes along each of these directions.

Preferably, according to one embodiment of the invention, the first vector signal VS1 further expresses an inclination angle a of the rail vehicle 100 relative to a horizontal plane H. Here, the controller 140 is configured to adjust the power signal $P_m$ indicating the amount of power produced by the onboard motor and/or the speed signal indicating the second speed $v_2$ based on the inclination angle $\alpha$ when estimating the overall weight $m_{tot}$ of the rail vehicle 100. Consequently, the estimate of the overall weight $m_{tot}$ may be adequately adjusted if the rail vehicle 100 travels on non-horizontal ground when obtaining the power signal $P_m$ and the speed signal, such that in an uphill slope the part of the motor power that is converted into potential energy is discarded; and conversely, in a downhill slope the part of the kinetic energy originating from potential energy is discarded.

Naturally, for the same reasons, it is also preferable to compensate for the inclination angle $\alpha$ when repeatedly executing the above steps (a) to (c) to estimate the respective fraction $m_1$, $m_2$ and $m_3$ of the overall weight $m_{tot}$ carried by each of the wheel axles 131, 132 and 133 in the driving subset of the rail vehicle's 100 wheel axles.

Figure 2 illustrates a second accelerometer 235 that is eccentrically arranged relative to a rotation axis of at least one wheel, say 121. The second accelerometer 235 is configured to produce the second vector signal VS2 expressing movements of the second accelerometer 235 in a plane orthogonal to the rotation axis of the at least one wheel 121, and transmit a signal containing the second vector signal VS2 to the controller 140.

Figure 5 shows a block diagram of the controller 140 according to one embodiment of the invention. The controller 140 includes processing circuitry in the form of at least one processor 530 and a memory unit 520, i.e. non-volatile data carrier, storing a computer program 525, which, in turn, contains software for making the at least one processor 530 execute the actions mentioned in this description when the computer program 525 is run on the at least one processor 530.

The controller 140 contains input interfaces configured to receive the first and second vector signals VS1 and VS2 respectively, the power signal $P_m$ and the speed signal expressing the speeds $v_1$ and $v_2$ respectively. Further, the controller 140 contains outputs configured to provide the acceleration control signals A1, A2 and A3, the brake control signals B1, B2, B3 and B4, and information about the individual axle weights, such as the respective fractions $m_1$, $m_2$, $m_3$ and $m_4$ of the overall weight $m_{tot}$. As mentioned above, one or more of the input and/or output signals may be communicated via the data bus 150.

According to one embodiment of the invention, the controller 140 is configured to provide the respective fractions

$m_1$, $m_2$ and $m_3$ of the overall weight $m_{tot}$ to each of the acceleration controllers 161, 162, and 163 to enable the acceleration controllers to cause its associated drive unit 101, 102 and 103 respectively to produce a respective appropriate traction force in response to the acceleration control signals A1, A2 and A3. Here, the appropriate traction force is based on the respective fraction $m_1$, $m_2$ or $m_3$ of the overall weight $m_{tot}$ applicable to the wheel axle in question 131, 132 or 133 respectively.

According to one embodiment of the invention, the controller 140 is co-located with the acceleration controller. Thus, for example, the controller 140 may be integrated into the acceleration controller 161, or vice versa. Alternatively, the functionality of the controller 140 may be distributed over two or more of the acceleration controllers 161, 162 and/or 163.

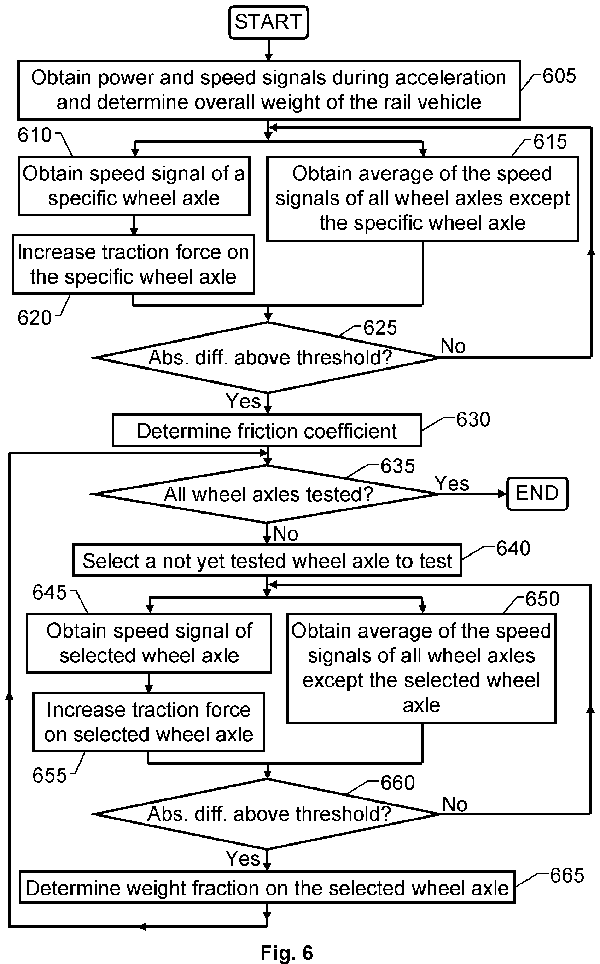

In order to sum up, and with reference to the flow diagram in Figure 6, we will now describe the computer-implemented method for a rail vehicle that is carried out by the controller 140.

In a first step 605, signals are obtained that express first and second speeds $v_1$ and $v_2$ and an amount of power produced by the drive units of the rail vehicle 100 to accelerate it from the first speed $v_1$ to the second speed $v_2$.

In a step 610 thereafter, a speed signal is obtained, which indicates a rotational speed $\omega_1$ of a specific one the rail vehicle's 100 wheel axles, say 131.

In a step 615, preferably essentially parallel to step 610, an average value is obtained, which represents an average rotational speed $\omega_a$ of the rotational speeds $\omega_2$ and $\omega_3$ of the wheel axles 132 and 133 respectively in the driving subset of the wheel axles except the specific wheel axle 131

In a step 620 subsequent to step 610 and preferably essentially parallel to step 615, an acceleration control signal is produced that is configured to cause a drive unit to apply an increased traction force to the specific wheel axle 131.

Thereafter, a step 625 checks if an absolute difference $|\omega_1 - \omega_a|$ between the rotational speed $\omega_1$ of the specific wheel axle 131 and the average rotational speed $\omega_a$ of the wheel axles in the driving subset except the specific wheel axle 131 exceeds a threshold value. If so, a step 630 follows. Otherwise, the procedure loops back to steps 610 and 615.

In step 630, a parameter $\mu_m$ is determined that reflects a friction coefficient $\mu_e$ between the wheels 121a and 121b on the specific wheel axle 131 and the rails 191 and 192 upon which the rail vehicle 100 travels.

Subsequently, a step 635 checks if all the wheel axles 131, 132, and 133 in the driving subset of the rail vehicle 100 have been tested. If so, the procedure ends. If not, the procedure continues to a step 640 in which a not yet tested driving wheel axle is selected.

Then, in a step 645, a speed signal is obtained, which indicates a rotational speed of the selected wheel axle.

In a step 650, preferably essentially parallel to step 645, an average value is obtained, which represents an average of the rotational speeds of the rail vehicle's 100 wheel axles except the selected wheel axle.

In a step 655 subsequent to step 645 and preferably essentially parallel to step 650, an acceleration control signal is produced that is configured to cause a drive unit to apply an increased traction force to the selected wheel axle.

Thereafter, a step 660 checks if an absolute difference between the rotational speed of the selected wheel axle and the average rotational speed of the wheel axles except the selected wheel axle exceeds a threshold value. If so, a step 665 follows. Otherwise, the procedure loops back to steps 645 and 650.

In step 665, a respective fraction of the overall weight $m_{tot}$ carried by the selected wheel axle is estimated. Thereafter, the procedure loops back to step 635. It should be noted that the fraction of the overall weight $m_{tot}$ carried by the first wheel axle may be determined as a remaining faction of the overall weight $m_{tot}$ when the respective fractions on all the other wheel axles have been determined.

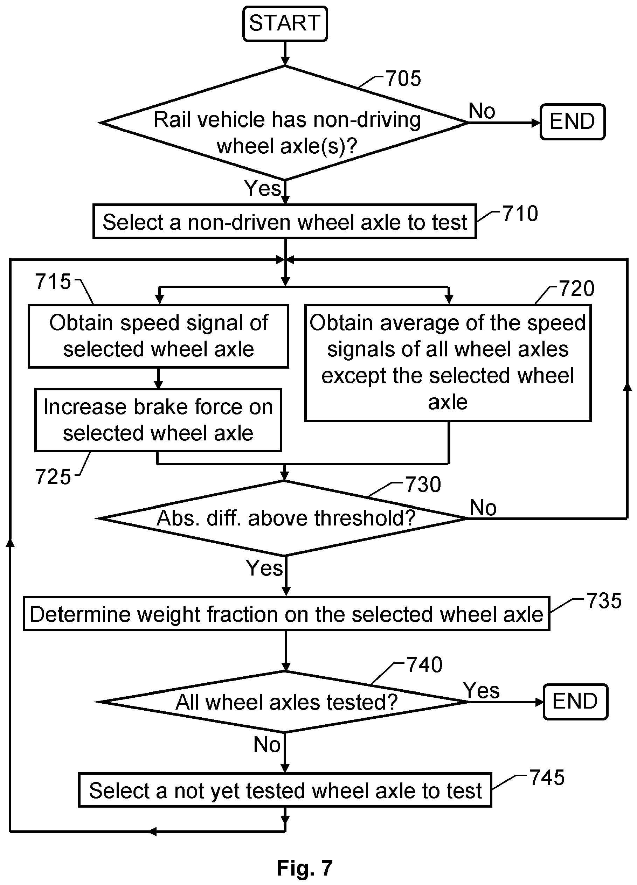

Referring now to Figure 7, we will describe one embodiment of the method according to the invention, which is applicable to determine the fractions of the overall weight $m_{tot}$ that are carried by any non-driven axles of a rail vehicle.

In a first step 705, it is checked if the rail vehicle has at least one non-driving wheel axle. If not, the procedure ends; and otherwise, a step 710 follows.

In step 710, one of the non-driven wheel axles is selected for testing. Thereafter, in a step 715, a wheel speed signals is obtained, which indicates a rotational speed $\omega_4$ of the selected wheel axle.

In a step 720, preferably executed essentially in parallel with step 715, an average speed signal is obtained, which represents an average rotational speed $\omega_a$ of the rotational speeds $\omega_1$, $\omega_2$ and $\omega_3$ of each wheel axle of the rail vehicle except the selected non-driven wheel axle.

In a step 725 subsequent to step 715, a brake control signal is produced, which is configured to cause a brake unit to apply brake force to the selected non-driven wheel axle such that this brake unit applies a gradually increasing brake force to the non-driven wheel axle.

A step 730 subsequent to steps 720 and 725, determines during production of the brake control signal, an absolute difference between the rotational speed of the selected non-driven wheel axle and the average rotational speed of the rail vehicle's wheel axles except the selected non-driven wheel axle. If the absolute difference exceeds a threshold value, the procedure continues to a step 735, and otherwise the procedure loops back to steps 715 and 720.

In step 735, a parameter is determined that reflects a friction coefficient between a pair of wheels on the selected wheel axle and the pair of rails upon which the rail vehicle travels. Based on the parameter, in turn, a fraction of the rail vehicle's overall weight carried by the selected non-driven wheel axles is determined.

Thereafter, a step 740 checks if all non-driven wheel axles have been tested; and if so, the procedure ends. Otherwise, a step 745 follows in which a not yet tested wheel axles is selected for testing, and the procedure loops back to steps 715 and 720.

All of the process steps, as well as any sub-sequence of steps, described with reference to Figures 6 and 7 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

The invention is not restricted to the described embodiments in the figures, but may be varied freely within the scope of the claims.

**Claims**

1. A controller (140) for estimating axle weights of a rail vehicle (100) comprising a number of wheel axles (131, 132, 133, 134) and a set of drive units (101, 102, 103) configured to apply a respective traction force to each wheel axle in a driving subset of the wheel axles (131, 132, 133) so as to cause acceleration of the rail vehicle (100), which controller (140) is configured to obtain:

   a power signal ($P_m$) indicating an amount of power produced by the set of drive units (101, 102, 103) to accelerate the rail vehicle (100) from a first speed ($v_1$) to a second speed ($v_2$),
   a speed signal indicating respective values of the first and second speeds ($v_1$, $v_2$), and

   based thereon estimate an overall weight ($m_{tot}$) of the rail vehicle (100), **characterized in that** the controller (140) is further configured to estimate how the overall weight ($m_{tot}$) is distributed over the number of wheel axles (131, 132, 133, 134) by:

   (a) obtaining wheel speed signals indicating respective rotational speeds ($\omega_1$, $\omega_2$, $\omega_3$) of the wheel axles in the driving subset of the wheel axles (131, 132, 133),
   (b) producing an acceleration control signal (A1) to a specific drive unit (101) in the set of drive units such that this drive unit applies a gradually increasing traction force to a specific wheel axle (131) of the wheel axles in the driving subset of the wheel axles (131, 132, 133),
   (c) determining, repeatedly during production of the acceleration control signal (A1), an absolute difference ($| \omega_1 - \omega_a |$) between the rotational speed of the specific wheel axle (131) and an average rotational speed ($\omega_a$) of the wheel axles (132, 133) in the driving subset of the wheel axles except the specific wheel axle;
   and in response to the absolute difference ($| \omega_1 - \omega_a |$) exceeding a threshold value
   (d) determining a parameter ($\mu_m$) reflecting a friction coefficient ($\mu_e$) between a pair of wheels (121a, 121b) on the specific wheel axle (131) and a pair of rails (191, 192) upon which the rail vehicle (100) travels,

repeating steps (a) to (c) for each of the wheel axles in the driving subset of the wheel axles, and based thereon estimate a respective fraction ($m_1$, $m_2$, $m_3$) of the overall weight ($m_{tot}$) carried by each of wheel axles in the driving subset of the wheel axles (131, 132, 133).

2. The controller (140) according to claim 1, wherein for any non-driven wheel axle (134) of said number of wheel axles, which non-driven wheel axle (134) is not comprised in the driving subset of the wheel axles (131, 132, 133), the controller (140) is further configured to:

(e) obtain wheel speed signals indicating respective rotational speeds ($\omega_1$, $\omega_2$, $\omega_3$, $\omega_4$) of each wheel axle of said number of wheel axles (131, 132, 133, 134),

(f) produce a brake control signal (B4) to a brake unit (184) configured to apply a brake force to the non-driven wheel axle (134) such that this brake unit applies a gradually increasing brake force to the non-driven wheel axle (134),

(g) determine, repeatedly during production of the brake control signal (B4), an absolute difference ($| \omega_4 - \omega_a |$) between the rotational speed of the non-driven wheel axle (134) and an average rotational speed ($\omega_a$) of said number of wheel axles except the non-driven wheel axle (134); and in response to the absolute difference exceeding a threshold value

(h) determine a parameter ($\mu_m$) reflecting a friction coefficient ($\mu_e$) between a pair of wheels (124a, 124b) on the specific wheel axle (134) and the pair of rails (191, 192) upon which the rail vehicle (100) travels, repeat steps (e) to (g) for each of the non-driven wheel axles, and based thereon estimate a respective fraction ($m_4$) of the overall weight ($m_{tot}$) carried by each of the non-driven wheel axles.

3. The controller (140) according to any one of claims 1 or 2, comprising a first interface (511) configured to receive a first vector signal (VS1) expressing an inclination angle (a) of the rail vehicle (100) relative to a horizontal plane (H), and the controller (140) is configured to adjust at least one of the power signal ($P_m$) indicating the amount of power produced by the onboard motor and the speed signal indicating the second speed ($v_2$) based on the inclination angle (a) when estimating the overall weight ($m_{tot}$) of the rail vehicle (100).

4. The controller (140) according to claim 3, comprising a second interface (512) configured to receive a second vector signal (VS2) expressing a respective rotational movement of the wheels (121a, 121b; 122a, 122b; 123a, 123b) on each wheel axle in the driving subset of the wheel axles (131, 132, 133), which rotational movement is performed in a plane orthogonal to a respective rotation axis of the wheel axle, and the controller (140) is further configured to obtain the wheel speed signals indicating the respective rotational speeds ($\omega_1$, $\omega_2$, $\omega_3$) based on the first and second vector signals (VS1, VS2).

5. The controller (140) according to any one of the preceding claims, wherein the controller (140) is configured to provide the respective fractions ($m_1$, $m_2$, $m_3$) of the overall weight ($m_{tot}$) to a traction controller (161, 162, 163) to enable the traction controller to produce a respective acceleration control signal (A1, A2, A3) to each drive unit in the set of drive units (101, 102, 103), which respective traction force signal (A1, A2, A3) is based on the respective fractions ($m_1$, $m_2$, $m_3$) of the overall weight ($m_{tot}$).

6. The controller (140) according to claim 5, wherein the controller (140) is co-located with the traction controller (161, 162, 163).

7. The controller (140) according to any one of the preceding claims, wherein the controller (140) is configured to transmit the acceleration control signal (A1, A2, A3) via a data bus (150) in the rail vehicle (100).

8. A computer-implemented method for estimating axle weights of a rail vehicle (100) comprising a number of wheel axles (131, 132, 133, 134) and a set of drive units (101, 102, 103) configured to apply a respective traction force to each wheel axle in a driving subset of the wheel axles (131, 132, 133) so as to cause acceleration of the rail vehicle (100), the method comprising:

obtaining a power signal ($P_m$) indicating an amount of power produced by the set of drive units (101, 102, 103) to accelerate the rail vehicle (100) from a first speed ($v_1$) to a second speed ($v_2$),

obtaining a speed signal indicating respective values of the first and second speeds ($v_1$, $v_2$), and based thereon estimating an overall weight ($m_{tot}$) of the rail vehicle (100), **characterized by** estimating how the overall weight ($m_{tot}$) is distributed over the number of wheel axles (131, 132, 133, 134) by:

(a) obtaining wheel speed signals indicating respective rotational speeds ($\omega_1$, $\omega_2$, $\omega_3$) of the wheel axles in the driving subset of the wheel axles (131, 132, 133),

(b) producing an acceleration control signal (A1) to a specific drive unit (101) in the set of drive units such that this drive unit applies a gradually increasing traction force to a specific wheel axle (131) of the wheel axles in the driving subset of the wheel axles (131, 132, 133),

(c) determining, repeatedly during production of the acceleration control signal (A1), an absolute difference ($|\,\omega_1 - \omega_a\,|$) between the rotational speed of the specific wheel axle (131) and an average rotational speed ($\omega_a$) of the wheel axles (132, 133) in the driving subset of the wheel axles except the specific wheel axle; and in response to the absolute difference ($|\,\omega_1 - \omega_a\,|$) exceeding a threshold value

(d) determining a parameter ($\mu_m$) reflecting a friction coefficient ($\mu_e$) between a pair of wheels (121a, 121b) on the specific wheel axle (131) and a pair of rails (191, 192) upon which the rail vehicle (100) travels,

repeating steps (a) to (c) for each of the wheel axles in the driving subset of the wheel axles, and based thereon estimate a respective fraction ($m_1$, $m_2$, $m_3$) of the overall weight ($m_{tot}$) carried by each of wheel axles in the driving subset of the wheel axles (131, 132, 133).

9. The method according to claim 8, wherein for any non-driven wheel axle (134) of said number of wheel axles, which non-driven wheel axle (134) is not comprised in the driving subset of the wheel axles (131, 132, 133), the method further comprises:

(e) obtaining wheel speed signals indicating respective rotational speeds ($\omega_1$, $\omega_2$, $\omega_3$, $\omega_4$) of each wheel axle of said number of wheel axles (131, 132, 133, 134),

(f) producing a brake control signal (B4) to a brake unit (184) configured to apply a brake force to the non-driven wheel axle (134) such that this brake unit applies a gradually increasing brake force to the non-driven wheel axle (134),

(g) determining, repeatedly during production of the brake control signal (B4), an absolute difference ($|\,\omega_4 - \omega_a\,|$) between the rotational speed of the non-driven wheel axle (134) and an average rotational speed ($\omega_a$) of said number of wheel axles except the non-driven wheel axle (134); and in response to the absolute difference exceeding a threshold value

(h) determining a parameter ($\mu_m$) reflecting a friction coefficient ($\mu_e$) between a pair of wheels (124a, 124b) on the specific wheel axle (134) and the pair of rails (191, 192) upon which the rail vehicle (100) travels,

repeating steps (e) to (g) for each of the non-driven wheel axles, and based thereon estimate a respective fraction ($m_4$) of the overall weight ($m_{tot}$) carried by each of the non-driven wheel axles.

10. The method according to any one of the claims 8 or 9, comprising:

receiving a first vector signal (VS1) expressing an inclination angle ($\alpha$) of the rail vehicle (100) relative to a horizontal plane (H), and

adjusting at least one of the power signal ($P_m$) indicating the amount of power produced by the onboard motor and the speed signal indicating the second speed ($v_2$) based on the inclination angle ($\alpha$) when estimating the overall weight ($m_{tot}$) of the rail vehicle (100).

11. The method according to claim 10, comprising:

receiving a second vector signal (VS2) expressing a respective rotational movement of the wheels (121a, 121b; 122a, 122b; 123a, 123b) on each wheel axle in the driving subset of the wheel axles (131, 132, 133), which rotational movement is performed in a plane orthogonal to a respective rotation axis of the wheel axle, and obtaining the wheel speed signals indicating the respective rotational speeds ($\omega_1$, $\omega_2$, $\omega_3$) based on the first and second vector signals (VS1, VS2).

angle ($\alpha$) when estimating the overall weight ($m_{tot}$) of the rail vehicle (100).

12. The method according to any one of the claims 8 to 11, comprising:
to providing the respective fractions ($m_1$, $m_2$, $m_3$) of the overall weight ($m_{tot}$) to a traction controller (161, 162, 163) to enable the traction controller to produce a respective acceleration control signal (A1, A2, A3) to each drive unit in the set of drive units (101, 102, 103), which respective traction force signal (A1, A2, A3) is based on the respective fractions ($m_1$, $m_2$, $m_3$) of the overall weight ($m_{tot}$).

13. The method according to any one of the claims 8 to 12, comprising:

transmitting the acceleration control signal (A1, A2, A3) via a data bus (150) in the rail vehicle (100).

14. A computer program (525) loadable into a non-volatile data carrier (520) communicatively connected to at least one processor (530), the computer program (525) comprising software for executing the method according any of the claims 8 to 13 when the computer program (525) is run on the at least one processor (530).

15. A non-volatile data carrier (520) containing the computer program (425) of the claim 14.

**Patentansprüche**

1. Steuerung (140) zum Schätzen der Achsgewichte eines Schienenfahrzeugs (100), das eine Anzahl von Radachsen (131, 132, 133, 134) und einen Satz von Antriebseinheiten (101, 102, 103), die konfiguriert sind, um eine jeweilige Traktionskraft auf jede Radachse in einem Antriebsteilsatz der Radachsen (131, 132, 133) anzuwenden, um die Beschleunigung des Schienenfahrzeugs (100) zu bewirken, wobei die Steuerung (140) konfiguriert ist, um zu gewinnen:

ein Leistungssignal ($P_m$), das einen Betrag der Leistung anzeigt, die durch den Satz von Antriebseinheiten (101, 102, 103) erzeugt wird, um das Schienenfahrzeug (100) von einer ersten Geschwindigkeit ($v_1$) auf eine zweite Geschwindigkeit ($v_2$) zu beschleunigen,
ein Geschwindigkeitssignal, das jeweilige Werte der ersten und zweiten Geschwindigkeiten ($v_1$, $v_2$) anzeigt, und basierend darauf ein Gesamtgewicht ($m_{tot}$) des Schienenfahrzeugs (100) zu schätzen, **dadurch gekennzeichnet, dass** die Steuerung (140) ferner konfiguriert ist, um zu schätzen, wie das Gesamtgewicht ($m_{tot}$) über eine Anzahl von Radachsen (131, 132, 133, 134) verteilt ist, durch:

(a) Gewinnen von Drehzahlsignalen, die jeweilige Drehzahlen ($\omega_1$, $\omega_2$, $\omega_3$) der Radachsen in dem Antriebsteilsatz der Radachsen (131, 132, 133) darstellen,
(b) Erzeugen eines Beschleunigungssteuersignals (A1) an eine spezifische Antriebseinheit (101) in dem Satz von Antriebseinheiten, so dass diese Antriebseinheit eine allmählich zunehmende Traktionskraft auf eine spezifische Radachse (131) der Radachsen in dem Antriebsteilsatz der Radachsen (131, 132, 133) anwendet,
(c) während der Erzeugung des Beschleunigungssteuersignals (A1) wiederholtes Bestimmen eines Differenzbetrags ($|\omega_1 - \omega_a|$) zwischen der Drehzahl der spezifischen Radachse (131) und einer mittleren Drehzahl ($\omega_a$) der Radachsen (132, 133) in dem Antriebsteilsatz der Radachsen, abgesehen von der spezifischen Radachse;
und ansprechend darauf, dass der Differenzbetrag ($|\omega_1 - \omega_a|$) einen Schwellwert überschreitet,
(d) Bestimmen eines Parameters ($\mu_m$), der einen Reibungskoeffizienten ($\mu_e$) zwischen einem Paar von Rädern (121a, 121b) auf der spezifischen Radachse (131) und einem Paar von Schienen (191, 192), auf dem das Schienenfahrzeug (100) fährt, widerspiegelt,

Wiederholen der Schritte (a) bis (c) für jede der Radachsen in dem Antriebsteilsatz der Radachsen und basierend darauf Schätzen eines jeweiligen Bruchteils ($m_1$, $m_2$, $m_3$) des Gesamtgewichts ($m_{tot}$), das von jeder der Radachsen in dem Antriebsteilsatz der Radachsen (131, 132, 133) getragen wird.

2. Steuerung (140) nach Anspruch 1, wobei die Steuerung (140) ferner für jede nicht angetriebene Radachse (134) der Anzahl von Radachsen, wobei die nichtangetriebene Radachse (134) nicht in dem Antriebsteilsatz der Radachsen (131, 132, 133) enthalten ist, konfiguriert ist, um:

(e) Radgeschwindigkeitssignale, die jeweilige Drehzahlen ($\omega_1$, $\omega_2$, $\omega_3$, $\omega_4$) jeder Radachse der Anzahl von Radachsen (131, 132, 133, 134) anzeigen, zu gewinnen,
(f) ein Bremssteuersignal (B4) an eine Bremseinheit (184) zu erzeugen, die konfiguriert ist, um eine Bremskraft auf die nicht angetriebene Radachse (134) anzuwenden, so dass diese Bremseinheit eine allmählich zunehmende Bremskraft auf die nicht angetriebene Radachse (134) anwendet,
(g) wiederholt während der Erzeugung des Beschleunigungssteuersignals (B4) einen Differenzbetrag ($|\omega_4 - \omega_a|$) zwischen der Drehzahl der nicht angetriebenen Radachse (134) und einer mittleren Drehzahl ($\omega_a$) der Anzahl von Radachsen (132, 133), abgesehen von der nicht angetriebenen Radachse (134) zu bestimmen;
und ansprechend darauf, dass der Differenzbetrag einen Schwellwert überschreitet,
(h) einen Parameter ($\mu_m$), der einen Reibungskoeffizienten ($\mu_e$) zwischen einem Paar von Rädern (124a, 124b) auf der spezifischen Radachse (134) und einem Paar von Schienen (191, 192), auf dem das Schienenfahrzeug (100) fährt, widerspiegelt, zu bestimmen,

die Schritte (e) bis (g) für jede der nicht angetriebenen Radachsen zu wiederholen und basierend darauf einen jeweiligen Bruchteil ($m_4$) des Gesamtgewichts ($m_{tot}$), der von jeder der nicht angetriebenen Radachsen getragen wird, zu schätzen.

3. Steuerung (140) nach einem der Ansprüche 1 oder 2, die eine erste Schnittstelle (511) aufweist, die konfiguriert ist, um ein erstes Vektorsignal (VS1), das einen Neigungswinkel ($\alpha$) des Schienenfahrzeugs (100) relativ zu einer Horizontalebene (H) ausdrückt, zu empfangen, und wobei die Steuerung (140) konfiguriert ist, um das Leistungssignal ($P_m$), das den Betrag der von dem Motor an Bord erzeugten Leistung anzeigt, und/oder das Geschwindigkeitssignal, das die zweite Geschwindigkeit ($v_2$) anzeigt, basierend auf dem Neigungswinkel ($\alpha$) einzustellen, wenn das Gesamtgewicht ($m_{tot}$) des Schienenfahrzeugs (100) geschätzt wird.

4. Steuerung (140) nach Anspruch 3, die eine zweite Schnittstelle (512) aufweist, die konfiguriert ist, um ein zweites Vektorsignal (VS2), das eine jeweilige Drehbewegung der Räder (121a, 121b; 122a, 122b; 123a, 123b) auf jeder Radachse in dem Antriebsteilsatz der Radachsen (131, 132, 133) ausdrückt, zu empfangen, wobei diese Drehbewegung in einer Ebene orthogonal zu einer jeweiligen Drehachse der Radachse durchgeführt wird, und wobei die Steuerung (140) ferner konfiguriert ist, um die Radgeschwindigkeitssignale, welche die jeweiligen Drehzahlen ($\omega_1$, $\omega_2$, $\omega_3$) anzeigen, basierend auf den ersten und zweiten Vektorsignalen (VS1, VS2) zu gewinnen.

5. Steuerung (140) nach einem der vorhergehenden Ansprüche, wobei die Steuerung (140) konfiguriert ist, um die jeweiligen Bruchteile ($m_1$, $m_2$, $m_3$) des Gesamtgewichts ($m_{tot}$) an eine Traktionssteuerung (161, 162, 163) bereitzustellen, um die Traktionssteuerung in die Lage zu versetzen, ein jeweiliges Beschleunigungssteuersignal (A1, A2, A3) an jede Antriebseinheit in dem Satz von Antriebseinheiten (101, 102, 103) zu erzeugen, wobei das jeweilige Traktionskraftsignal (A1, A2, A3) auf den jeweiligen Bruchteilen ($m_1$, $m_2$, $m_3$) des Gesamtgewichts ($m_{tot}$) basiert.

6. Steuerung (140) nach Anspruch 5, wobei die Steuerung (140) und die Traktionssteuerung (161, 162, 163) am gleichen Ort zusammengelegt sind.

7. Steuerung (140) nach einem der vorhergehenden Ansprüche, wobei die Steuerung (140) konfiguriert ist, um das Beschleunigungssteuersignal (A1, A2, A3) über einen Datenbus (150) in dem Schienenfahrzeug (100) zu übertragen.

8. Computerimplementiertes Verfahren zum Schätzen der Achsgewichte eines Schienenfahrzeugs (100), das eine Anzahl von Radachsen (131, 132, 133, 134) und einen Satz von Antriebseinheiten (101, 102, 103) aufweist, die konfiguriert sind, um eine jeweilige Traktionskraft auf jede Radachse in einem Antriebsteilsatz der Radachsen (131, 132, 133) anzuwenden, um die Beschleunigung des Schienenfahrzeugs (100) zu bewirken, wobei das Verfahren aufweist:

Gewinnen eines Leistungssignals ($P_m$), das einen Betrag der Leistung anzeigt, die durch den Satz von Antriebseinheiten (101, 102, 103) erzeugt wird, um das Schienenfahrzeug (100) von einer ersten Geschwindigkeit ($v_1$) auf eine zweite Geschwindigkeit ($v_2$) zu beschleunigen,

Gewinnen eines Geschwindigkeitssignals, das jeweilige Werte der ersten und zweiten Geschwindigkeiten ($v_1$, $v_2$) anzeigt, und basierend darauf

Schätzen eines Gesamtgewichts ($m_{tot}$) des Schienenfahrzeugs (100), **gekennzeichnet durch** Schätzen, wie das Gesamtgewicht ($m_{tot}$) über eine Anzahl von Radachsen (131, 132, 133, 134) verteilt ist, **durch**:

(a) Gewinnen von Drehzahlsignalen, die jeweilige Drehzahlen ($\omega_1$, $\omega_2$, $\omega_3$) der Radachsen in dem Antriebsteilsatz der Radachsen (131, 132, 133) darstellen,

(b) Erzeugen eines Beschleunigungssteuersignals (A1) an eine spezifische Antriebseinheit (101) in dem Satz von Antriebseinheiten, so dass diese Antriebseinheit eine allmählich zunehmende Traktionskraft auf eine spezifische Radachse (131) der Radachsen in dem Antriebsteilsatz der Radachsen (131, 132, 133) anwendet,

(c) während der Erzeugung des Beschleunigungssteuersignals (A1) wiederholtes Bestimmen eines Differenzbetrags ($|\omega_1 - \omega_a|$) zwischen der Drehzahl der spezifischen Radachse (131) und einer mittleren Drehzahl ($\omega_a$) der Radachsen (132, 133) in dem Antriebsteilsatz der Radachsen, abgesehen von der spezifischen Radachse;

und ansprechend darauf, dass der Differenzbetrag ($|\omega_1 - \omega_a|$) einen Schwellwert überschreitet

(d) Bestimmen eines Parameters ($\mu_m$), der einen Reibungskoeffizienten ($\mu_e$) zwischen einem Paar von Rädern (121a, 121b) auf der spezifischen Radachse (131) und einem Paar von Schienen (191, 192), auf dem das Schienenfahrzeug (100) fährt, widerspiegelt,

Wiederholen der Schritte (a) bis (c) für jede der Radachsen in dem Antriebsteilsatz der Radachsen und basierend darauf Schätzen eines jeweiligen Bruchteils ($m_1$, $m_2$, $m_3$) des Gesamtgewichts ($m_{tot}$), das von jeder der Radachsen in dem Antriebsteilsatz der Radachsen (131, 132, 133) getragen wird.

9. Verfahren nach Anspruch 8, wobei das Verfahren für jede nicht angetriebene Radachse (134) der Anzahl von Radachsen, wobei die nichtangetriebene Radachse (134) nicht in dem Antriebsteilsatz der Radachsen (131, 132, 133) enthalten ist, ferner aufweist:

(e) Gewinnen von Radgeschwindigkeitssignalen, die jeweilige Drehzahlen ($\omega_1$, $\omega_2$, $\omega_3$, $\omega_4$) jeder Radachse der Anzahl von Radachsen (131, 132, 133, 134) anzeigen,

(f) Erzeugen eines Bremssteuersignals (B4) an eine Bremseinheit (184), die konfiguriert ist, um eine Bremskraft auf die nicht angetriebene Radachse (134) anzuwenden, so dass diese Bremseinheit eine allmählich zunehmende Bremskraft auf die nicht angetriebene Radachse (134) anwendet,

(g) während der Erzeugung des Beschleunigungssteuersignals (B4) wiederholtes Bestimmen eines Differenzbetrags ($|\,\omega_4 - \omega_a\,|$) zwischen der Drehzahl der nicht angetriebenen Radachse (134) und einer mittleren Drehzahl ($\omega_a$) der Anzahl von Radachsen (132, 133), abgesehen von der nicht angetriebenen Radachse (134); und ansprechend darauf, dass der Differenzbetrag einen Schwellwert überschreitet,

(h) Bestimmen eines Parameters ($\mu_m$), der einen Reibungskoeffizienten ($\mu_e$) zwischen einem Paar von Rädern (124a, 124b) auf der spezifischen Radachse (134) und einem Paar von Schienen (191, 192), auf dem das Schienenfahrzeug (100) fährt, widerspiegelt,

Wiederholen der Schritte (e) bis (g) für jede der nicht angetriebenen Radachsen und basierend darauf Schätzen eines jeweiligen Bruchteils ($m_4$) des Gesamtgewichts ($m_{tot}$), der von jeder der nicht angetriebenen Radachsen getragen wird.

10. Verfahren nach einem der Ansprüche 8 oder 9, das aufweist:

Empfangen eines ersten Vektorsignals (VS1), das einen Neigungswinkel ($\alpha$) des Schienenfahrzeugs (100) relativ zu einer Horizontalebene (H) ausdrückt, und

Einstellen des Leistungssignals ($P_m$), das den Betrag der von dem Motor an Bord erzeugten Leistung anzeigt, und/oder des Geschwindigkeitssignals, das die zweite Geschwindigkeit ($v_2$) anzeigt, basierend auf dem Neigungswinkel ($\alpha$), wenn das Gesamtgewicht ($m_{tot}$) des Schienenfahrzeugs (100) geschätzt wird.

11. Verfahren nach Anspruch 10, das aufweist:

Empfangen eines zweiten Vektorsignals (VS2), das eine jeweilige Drehbewegung der Räder (121a, 121b; 122a, 122b; 123a, 123b) auf jeder Radachse in dem Antriebsteilsatz der Radachsen (131, 132, 133) ausdrückt, wobei diese Drehbewegung in einer Ebene orthogonal zu einer jeweiligen Drehachse der Radachse durchgeführt wird, und

Gewinnen der Radgeschwindigkeitssignale, welche die jeweiligen Drehzahlen ($\omega_1$, $\omega_2$, $\omega_3$) anzeigen, basierend auf den ersten und zweiten Vektorsignalen (VS1, VS2).

12. Verfahren nach einem der Ansprüche 8 bis 11, das aufweist:
Bereitstellen der jeweiligen Bruchteile ($m_1$, $m_2$, $m_3$) des Gesamtgewichts ($m_{tot}$) an eine Traktionssteuerung (161, 162, 163), um die Traktionssteuerung in die Lage zu versetzen, ein jeweiliges Beschleunigungssteuersignal (A1, A2, A3) an jede Antriebseinheit in dem Satz von Antriebseinheiten (101, 102, 103) zu erzeugen, wobei das jeweilige Traktionskraftsignal (A1, A2, A3) auf den jeweiligen Bruchteilen ($m_1$, $m_2$, $m_3$) des Gesamtgewichts ($m_{tot}$) basiert.

13. Verfahren nach einem der Ansprüche 8 bis 12, das aufweist:
Übertragen des Beschleunigungssteuersignals (A1, A2, A3) über einen Datenbus (150) in dem Schienenfahrzeug (100).

14. Computerprogramm (525), das in einen nicht-flüchtigen Datenträger (520) ladbar ist, der kommunikationsfähig mit wenigstens einem Prozessor (530) verbunden ist, wobei das Computerprogramm (525) Software zum Ausführen des Verfahrens nach einem der Ansprüche 8 bis 13 aufweist, wenn das Computerprogramm (525) auf dem wenigstens einen Prozessor (530) laufen gelassen wird.

**15.** Nicht-flüchtiger Datenträger (520), der das Computerprogramm (525) des Anspruchs 14 enthält.

**Revendications**

**1.** Contrôleur (140) d'estimation de poids d'essieux d'un véhicule ferroviaire (100) comprenant un certain nombre d'essieux de roue (131, 132, 133, 134) et un ensemble d'unités d'entraînement (101, 102, 103) configurées pour appliquer une force de traction respective à chaque essieu de roue dans un sous-ensemble d'entraînement des essieux de roue (131, 132, 133) de sorte à provoquer une accélération du véhicule ferroviaire (100), lequel contrôleur (140) est configuré pour obtenir :

un signal de puissance ($P_m$) indiquant une quantité d'énergie produite par l'ensemble d'unités d'entraînement (101, 102, 103) pour accélérer le véhicule ferroviaire (100) d'une première vitesse ($v_1$) à une deuxième vitesse ($v_2$),
un signal de vitesse indiquant les valeurs respectives des première et deuxième vitesses ($v_1$, $v_2$), et
sur cette base, estimer un poids total ($m_{tot}$) du véhicule ferroviaire (100), **caractérisé en ce que** le contrôleur (140) est en outre configuré pour estimer la façon dont le poids total ($m_{tot}$) est réparti sur le nombre d'essieux de roue (131, 132, 133, 134) en :

(a) obtenant des signaux de vitesse de roue indiquant des vitesses de rotation respectives ($\omega_1$, $\omega_2$, $\omega_3$) des essieux de roue dans le sous-ensemble d'entraînement des essieux de roue (131, 132, 133),
(b) fournissant un signal de commande d'accélération (A1) à une unité d'entraînement spécifique (101) dans l'ensemble d'unités d'entraînement de sorte que cette unité d'entraînement applique une force de traction augmentant progressivement à un essieu de roue spécifique (131) parmi les essieux de roue dans le sous-ensemble d'entraînement des essieux de roue (131, 132, 133),
(c) déterminant, de façon répétée pendant la fourniture du signal de commande d'accélération (A1), une différence absolue ($|\omega_1 - \omega_a|$) entre la vitesse de rotation de l'essieu de roue spécifique (131) et une vitesse de rotation moyenne ($\omega_a$) des essieux de roue (132, 133) dans le sous-ensemble d'entraînement des essieux de roue à l'exception de l'essieu de roue spécifique ;
et, en réponse à un dépassement d'une valeur seuil par la différence absolue ($|\omega_1 - \omega_a|$),
(d) déterminant un paramètre ($\mu_m$) reflétant un coefficient de frottement ($\mu_e$) entre une paire de roues (121a, 121b) sur l'essieu de roue spécifique (131) et une paire de rails (191, 192) sur lesquels le véhicule ferroviaire (100) se déplace,

répéter les étapes (a) à (c) pour chacun des essieux de roue dans le sous-ensemble d'entraînement des essieux de roue, et sur cette base estimer une fraction respective ($m_1$, $m_2$, $m_3$) du poids total ($m_{tot}$) porté par chacun des essieux de roue dans le sous-ensemble d'entraînement des essieux de roue (131, 132, 133).

**2.** Contrôleur (140) selon la revendication 1, dans lequel pour tout essieu de roue non entraîné (134) dudit nombre d'essieux de roue, lequel essieu de roue non entraîné (134) n'est pas compris dans le sous-ensemble d'entraînement des essieux de roue (131, 132, 133), le contrôleur (140) est en outre configuré pour :

(e) obtenir des signaux de vitesse de roue indiquant les vitesses de rotation respectives ($\omega_1$, $\omega_2$, $\omega_3$, $\omega_4$) de chaque essieu de roue dudit nombre d'essieux de roue (131, 132, 133, 134),
(f) fournir un signal de commande de freinage (B4) vers une unité de freinage (184) configurée pour appliquer une force de freinage à l'essieu de roue non entraîné (134) de sorte que cette unité de freinage applique une force de freinage augmentant progressivement à l'essieu de roue non entraîné (134),
(g) déterminer, de façon répétée pendant la fourniture du signal de commande de freinage (B4), une différence absolue ($|\omega_4 - \omega_a|$) entre la vitesse de rotation de l'essieu de roue non entraîné (134) et une vitesse de rotation moyenne ($\omega_a$) dudit nombre d'essieux de roue à l'exception de l'essieu de roue non entraîné (134) ; et, en réponse à un dépassement d'une valeur seuil par la différence absolue
(h) déterminer un paramètre ($\mu_m$) reflétant un coefficient de frottement ($\mu_e$) entre une paire de roues (124a, 124b) sur l'essieu de roue spécifique (134) et la paire de rails (191, 192) sur laquelle se déplace le véhicule ferroviaire (100),

répéter les étapes (e) à (g) pour chacun des essieux de roues non entraînés, et estimer sur cette base une fraction respective (m4) du poids total ($m_{tot}$) porté par chacun des essieux de roues non entraînés.

**3.** Contrôleur (140) selon l'une quelconque des revendications 1 ou 2, comprenant une première interface (511) configurée pour recevoir un premier signal vectoriel (VS1) exprimant un angle d'inclinaison ($\alpha$) du véhicule ferroviaire (100) par rapport à un plan horizontal (H), et le contrôleur (140) est configuré pour ajuster au moins un parmi le signal de puissance ($P_m$) indiquant la quantité d'énergie produite par le moteur embarqué et le signal de vitesse indiquant la deuxième vitesse ($v_2$) sur la base de l'angle d'inclinaison ($\alpha$) pendant l'estimation du poids total ($m_{tot}$) du véhicule ferroviaire (100) .

4. Contrôleur (140) selon la revendication 3, comprenant une deuxième interface (512) configurée pour recevoir un deuxième signal vectoriel (VS2) exprimant un mouvement de rotation respectif des roues (121a, 121b ; 122a, 122b ; 123a, 123b) sur chaque essieu de roue dans le sous-ensemble d'entraînement des essieux de roue (131, 132, 133), lequel mouvement de rotation est effectué dans un plan orthogonal à un axe de rotation respectif de l'essieu de roue, et le contrôleur (140) est en outre configuré pour obtenir les signaux de vitesse de roue indiquant les vitesses de rotation respectives ($\omega_1$, $\omega_2$, $\omega_3$) sur la base des premier et deuxième signaux vectoriels (VS1, VS2).

5. Contrôleur (140) selon l'une quelconque des revendications précédentes, dans lequel le contrôleur (140) est configuré pour fournir les fractions respectives ($m_1$, $m_2$, $m_3$) du poids total ($m_{tot}$) à un contrôleur de traction (161, 162, 163) pour permettre au contrôleur de traction de fournir un signal de commande d'accélération respectif (A1, A2, A3) à chaque unité d'entraînement dans l'ensemble d'unités d'entraînement (101, 102, 103), lequel signal de force de traction respectif (A1, A2, A3) est basé sur les fractions respectives ($m_1$, $m_2$, $m_3$) du poids total ($m_{tot}$).

6. Contrôleur (140) selon la revendication 5, dans lequel le contrôleur (140) est colocalisé avec le contrôleur de traction (161, 162, 163).

7. Contrôleur (140) selon l'une quelconque des revendications précédentes, dans lequel le contrôleur (140) est configuré pour transmettre le signal de commande d'accélération (A1, A2, A3) par l'intermédiaire d'un bus de données (150) dans le véhicule ferroviaire (100).

8. Procédé mis en œuvre par ordinateur pour estimer des poids des essieux d'un véhicule ferroviaire (100) comprenant un certain nombre d'essieux de roue (131, 132, 133, 134) et un ensemble d'unités d'entraînement (101, 102, 103) configurées pour appliquer une force de traction respective à chaque essieu de roue dans un sous-ensemble d'entraînement des essieux de roue (131, 132, 133) de sorte à provoquer une accélération du véhicule ferroviaire (100), le procédé comprenant :

l'obtention d'un signal de puissance ($P_m$) indiquant une quantité d'énergie produite par l'ensemble d'unités d'entraînement (101, 102, 103) pour accélérer le véhicule ferroviaire (100) d'une première vitesse ($v_1$) à une deuxième vitesse ($v_2$),
l'obtention d'un signal de vitesse indiquant les valeurs respectives des première et deuxième vitesses ($v_1$, $v_2$), et sur cette base,
l'estimation d'un poids total ($m_{tot}$) du véhicule ferroviaire (100), **caractérisé par** l'estimation de la façon dont le poids total ($m_{tot}$) est réparti sur le nombre d'essieux de roue (131, 132, 133, 134) en :

(a) obtenant des signaux de vitesse de roue indiquant des vitesses de rotation respectives ($\omega_1$, $\omega_2$, $\omega_3$) des essieux de roue dans le sous-ensemble d'entraînement des essieux de roue (131, 132, 133),
(b) fournissant un signal de commande d'accélération (A1) à une unité d'entraînement spécifique (101) dans l'ensemble d'unités d'entraînement de sorte que cette unité d'entraînement applique une force de traction augmentant progressivement à un essieu de roue spécifique (131) parmi les essieux de roue dans le sous-ensemble d'entraînement des essieux de roue (131, 132, 133),
(c) déterminant, de façon répétée pendant la fourniture du signal de commande d'accélération (A1), une différence absolue ($|\omega_1 - \omega_a|$) entre la vitesse de rotation de l'essieu de roue spécifique (131) et une vitesse de rotation moyenne ($\omega_a$) des essieux de roue (132, 133) dans le sous-ensemble d'entraînement des essieux de roue à l'exception de l'essieu de roue spécifique ; et, en réponse à un dépassement d'une valeur seuil par la différence absolue ($|\omega_1 - \omega_a|$),
(d) déterminant un paramètre ($\mu_m$) reflétant un coefficient de frottement ($\mu_e$) entre une paire de roues (121a, 121b) sur l'essieu de roue spécifique (131) et une paire de rails (191, 192) sur lesquels le véhicule ferroviaire (100) se déplace,

la répétition des étapes (a) à (c) pour chacun des essieux de roue dans le sous-ensemble d'entraînement des essieux de roue, et sur cette base l'estimation d'une fraction respective ($m_1$, $m_2$, $m_3$) du poids total ($m_{tot}$) porté par chacun des essieux de roue dans le sous-ensemble d'entraînement des essieux de roue (131, 132, 133).

**9.** Procédé selon la revendication 8, dans lequel pour tout essieu de roue non entraîné (134) dudit nombre d'essieux de roue, lequel essieu de roue non entraîné (134) n'est pas compris dans le sous-ensemble d'entraînement des essieux de roue (131, 132, 133), le procédé comprend en outre :

(e) l'obtention de signaux de vitesse de roue indiquant des vitesses de rotation respectives ($\omega_1$, $\omega_2$, $\omega_3$, $\omega_4$) de chaque essieu de roue dudit nombre d'essieux de roue (131, 132, 133, 134),

(f) la fourniture d'un signal de commande de freinage (B4) vers une unité de freinage (184) configurée pour appliquer une force de freinage à l'essieu de roue non entraîné (134) de sorte que cette unité de freinage applique une force de freinage augmentant progressivement à l'essieu de roue non entraîné (134),

(g) la détermination, de façon répétée pendant la fourniture du signal de commande de freinage (B4), d'une différence absolue ($|\omega_4 - \omega_a|$) entre la vitesse de rotation de l'essieu de roue non entraîné (134) et une vitesse de rotation moyenne ($\omega_a$) dudit nombre d'essieux de roue à l'exception de l'essieu de roue non entraîné (134) ; et, en réponse à un dépassement d'une valeur seuil par la différence absolue,

(h) la détermination d'un paramètre ($\mu_m$) reflétant un coefficient de frottement ($\mu_e$) entre une paire de roues (124a, 124b) sur l'essieu de roue spécifique (134) et la paire de rails (191, 192) sur laquelle se déplace le véhicule ferroviaire (100),

la répétition des étapes (e) à (g) pour chacun des essieux de roues non entraînés, et estimer sur cette base une fraction respective (m4) du poids total ($m_{tot}$) porté par chacun des essieux de roues non entraînés.

**10.** Procédé selon l'une quelconque des revendications 8 ou 9, comprenant :

la réception d'un premier signal vectoriel (VS1) exprimant un angle d'inclinaison ($\alpha$) du véhicule ferroviaire (100) par rapport à un plan horizontal (H), et

le réglage d'au moins un parmi le signal de puissance ($P_m$) indiquant la quantité d'énergie produite par le moteur embarqué et le signal de vitesse indiquant la deuxième vitesse ($v_2$) en fonction de l'angle d'inclinaison ($\alpha$) pendant l'estimation du poids total ($m_{tot}$) du véhicule ferroviaire (100).

**11.** Procédé selon la revendication 10, comprenant :

la réception d'un deuxième signal vectoriel (VS2) exprimant un mouvement de rotation respectif des roues (121a, 121b ; 122a, 122b ; 123a, 123b) sur chaque essieu de roue dans le sous-ensemble d'entraînement des essieux de roue (131, 132, 133), lequel mouvement de rotation est effectué dans un plan orthogonal à un axe de rotation respectif de l'essieu de roue, et

l'obtention des signaux de vitesse de roue indiquant les vitesses de rotation respectives ($\omega_1$, $\omega_2$, $\omega_3$) sur la base des premier et deuxième signaux vectoriels (VS1, VS2),

l'angle ($\alpha$) pendant l'estimation du poids total ($m_{tot}$) du véhicule ferroviaire (100).

**12.** Procédé selon l'une quelconque des revendications 8 à 11, comprenant :
la fourniture des fractions respectives ($m_1$, $m_2$, $m_3$) du poids total ($m_{tot}$) à un contrôleur de traction (161, 162, 163) pour permettre au contrôleur de traction de fournir un signal de commande d'accélération respectif (A1, A2, A3) à chaque unité d'entraînement dans l'ensemble d'unités d'entraînement (101, 102, 103), lequel signal de force de traction respectif (A1, A2, A3) est basé sur les fractions respectives ($m_1$, $m_2$, $m_3$) du poids total ($m_{tot}$).

**13.** Procédé selon l'une quelconque des revendications 8 à 12, comprenant :
la transmission du signal de commande d'accélération (A1, A2, A3) par l'intermédiaire d'un bus de données (150) dans le véhicule ferroviaire (100).

**14.** Programme informatique (525) chargeable dans un support de données non volatil (520) connecté en communication avec au moins un processeur (530), le programme informatique (525) comprenant un logiciel pour exécuter le procédé selon l'une quelconque des revendications 8 à 13 lorsque le programme informatique (525) est exécuté sur l'au moins un processeur (530).

**15.** Support de données non volatil (520) contenant le programme informatique (425) selon la revendication 14.

Fig. 1

**Fig. 2**

**Fig. 3**

**Fig. 4**

**Fig. 5**

START

Obtain power and speed signals during acceleration and determine overall weight of the rail vehicle — 605

610

Obtain speed signal of a specific wheel axle

Obtain average of the speed signals of all wheel axles except the specific wheel axle — 615

Increase traction force on the specific wheel axle

620

625 Abs. diff. above threshold? — No

Yes

Determine friction coefficient — 630

635 All wheel axles tested? — Yes → END

No

Select a not yet tested wheel axle to test — 640

645

Obtain speed signal of selected wheel axle

Obtain average of the speed signals of all wheel axles except the selected wheel axle — 650

Increase traction force on selected wheel axle

655

660 Abs. diff. above threshold? — No

Yes

Determine weight fraction on the selected wheel axle — 665

**Fig. 6**

21

**Fig. 7**

**EP 4 331 927 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9358846 B
- US 9500514 B
- US 9211879 B